# EUROPEAN PATENT APPLICATION

(11) **EP 2 680 137 A1**
(43) Date of publication of application: **01.01.2014**
(21) Application number: 11869795.2
(22) Date of filing: 27.07.2011
(51) Int. Cl.: G06F 9/445

(54) **METHOD AND SYSTEM FOR MANAGING BIOS CONFIGURATION DATA OF BASIC INPUT/OUTPUT SYSTEM**

(71) Applicant: Huawei Technologies Co., Ltd, Shenzhen, Guangdong 518129 (CN)
(72) Inventor: TAO, Lin, Shenzhen Guangdong 518129 (CN); LI, Yi, Shenzhen Guangdong 518129 (CN); WANG, Feizhou, Shenzhen Guangdong 518129 (CN); LI, Huadong, Shenzhen Guangdong 518129 (CN)
(74) Representative: Pfenning, Meinig & Partner GbR
(86) International application number: PCT/CN2011/077680
(87) International publication number: WO 2013/013396

(57) **Abstract**

Disclosed in the present invention are a method and a system for managing BIOS configuration data of a basic input/output system. The method includes: reading a BIOS program code, and executing a BIOS program; when executing the BIOS program, executing different code segments in the BIOS program according to read BIOS configuration data; and when new BIOS configuration data is required for executing the BIOS program, using a value in a new storage area as the new BIOS configuration data. Through the solution provided by the present invention, it can be ensured that, after the BIOS program is upgraded and when the number of configuration items is increased, current BIOS configuration data in a storage medium is still read effectively.

## Description

### TECHNICAL FIELD

The present invention relates to the technical field of communications devices, and in particular, to a method and a system for managing BIOS configuration data of a basic input/output system.

### BACKGROUND

In a server or personal computer, a BIOS (Base Input/Output System), basic input/output system) is a program solidified on a system motherboard, which is usually referred to as a BIOS program. When the BIOS motherboard is started and a CPU (Central Processing Unit, central processing unit) executes the BIOS program, different code segments in the BIOS program are executed according to read BIOS configuration data stored in a CMOS (Complementary Metal Oxide Semiconductor, complementary metal oxide semiconductor) storage medium, thereby finally implementing basic configuration of the basic input/output system. The CMOS storage medium is a readable and writable RAM (Random Access Memory, random access memory) on the motherboard and is powered by a motherboard battery, to ensure that after the system is powered down, current stored BIOS configuration data of a user is not lost, so that the CPU utilizes the BIOS configuration data set by the user to execute the BIOS program, thereby implementing the basic configuration of the basic input/output system.

When different manufacturers dynamically allocate a storage area to BIOS configuration data corresponding to each version of BIOS programs, so that each version of the BIOS program corresponds to the BIOS configuration data one by one. For example, when a BIOS program of version A is executed, different codes in the BIOS program may be executed according to BIOS configuration data corresponding to the version; when a BIOS program of version B is executed, different codes in the BIOS program may be executed according to BIOS configuration data corresponding to the version. That is to say, the BIOS program is coupled with the BIOS configuration data.

In a case that the system motherboard needs to adapt to a new-typed CPU, identify new hardware or solve some special failure problems in the telecommunication field, the BIOS program needs to be upgraded to adapt to requirements of new hardware and software. However, because the BIOS program is coupled with the BIOS configuration data, when a BIOS program of a new version is executed, if a new configuration item is added, the layout of current BIOS configuration data is destroyed, so that the current BIOS configuration data cannot be normally invoked and reconfiguration is required, so a workload is extremely heavy.

### SUMMARY

In view of this, the present invention provides a method and a system for managing BIOS configuration data of a basic input/output system, so as to ensure that, after a BIOS program is upgraded and when the number of configuration items is increased, current BIOS configuration data in a storage medium can still be read effectively. Specific solutions are as follows.

A method for managing BIOS configuration data of a basic input/output system includes:
reading a BIOS program code and executing a BIOS program;
when executing the BIOS program, executing different code segments in the BIOS program according to read BIOS configuration data, where the BIOS configuration data is stored in a fixed storage area of a non-volatile storage medium and the fixed storage area is independent of a storage area of the BIOS program code; and
when new BIOS configuration data is required for executing the BIOS program, using a value in a new storage area as the new BIOS configuration data, where the new storage area is an area independent of the storage area of the current BIOS configuration data and the storage area of the BIOS program code, and the value in the new storage area is a pre-agreed default configuration value.

Accordingly, an embodiment of the present invention further provides a system for managing BIOS configuration data of a basic input/output system, including:
a central processing unit, configured to read a BIOS program code and execute a BIOS program;
when executing the BIOS program, execute different code segments in the BIOS program according to read BIOS configuration data, where the BIOS configuration data is stored in a fixed area of a non-volatile storage medium and the fixed area is independent of a storage area of the BIOS program code; and
when new BIOS configuration data is required for executing the BIOS program, use a value in a new storage area as the new BIOS configuration data, where the new storage area is an area independent of the storage area of the current BIOS configuration data and the storage area of the BIOS program code, and the value in the new storage area is a pre-agreed default configuration value;
the non-volatile storage medium, configured to store, in the fixed area, the BIOS configuration data which is required for executing the different code segments in the BIOS program; and
a BIOS program storage medium, configured to store the BIOS program code.

Compared with an existing manner of dynamically storing BIOS configuration data, in the present invention, BIOS configuration data is stored in a fixed storage area of a non-volatile storage medium, where the fixed storage area is independent of a storage area of a BIOS program code; when new BIOS configuration data is required for executing an upgraded BIOS program, a value in a new storage area independent of a current BIOS configuration area is used as the new BIOS configuration data. Therefore, in a manner of fixedly storing the BIOS configuration data and allocating a pre-agreed area to a newly added configuration item, after the BIOS program is upgraded and when the number of configuration items is increased, it can be ensured that the current BIOS configuration data in the storage medium is still read effectively.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from the accompanying drawings without creative efforts.

FIG. 1 is a schematic structural diagram of a configuration data storage manner according to an embodiment of the present invention;

FIG. 2 is a first flow chart of a method for managing BIOS configuration data of a basic input/output system according to an embodiment of the present invention;

FIG. 3 is another schematic structural diagram of a configuration data storage manner according to an embodiment of the present invention;

FIG. 4 is a second flow chart of a method for managing BIOS configuration data of a basic input/output system according to an embodiment of the present invention; and

FIG. 5 is a schematic structural diagram of a system for managing BIOS configuration data of a basic input/output system according to an embodiment of the present invention.

### DESCRIPTION OF EMBODIMENTS

In an actual application, a system motherboard of a server or a personal computer needs to adapt to a new-typed CPU, identify new hardware or solve some special failure problems in the telecommunication field, so that a BIOS needs to be upgraded to adapt to requirements of new hardware and software. To ensure that, after the BIOS is upgraded and when the number of configuration items is increased, current configuration data in a storage medium can still be read effectively, embodiments of the present invention provide a method and a system for managing BIOS configuration data of a basic input/output system.

First, a method for managing BIOS configuration data of a basic input/output system provided by the present invention is described in the following.

A method for managing BIOS configuration data of a basic input/output system includes:
reading a BIOS program code and executing a BIOS program;
when executing the BIOS program, executing different code segments in the BIOS program according to read BIOS configuration data, where the BIOS configuration data is stored in a fixed storage area of a non-volatile storage medium and the fixed storage area is independent of a storage area of the BIOS program code; and
when new BIOS configuration data is required for executing the BIOS program, using a value in a new storage area as the new BIOS configuration data, where the new storage area is an area independent of the storage area of the current BIOS configuration data and the storage area of the BIOS program code, and the value in the new storage area is a pre-agreed default configuration value.

Compared with an existing manner of dynamically storing BIOS configuration data, in the present invention, BIOS configuration data is stored in a fixed storage area of a non-volatile storage medium, where the fixed storage area is independent of a storage area of a BIOS program code; when new BIOS configuration data is required for executing an upgraded BIOS program, a value in a new storage area independent of a current BIOS configuration area is used as the new BIOS configuration data. Therefore, in a manner of fixedly storing the BIOS configuration data and allocating a pre-agreed area to a newly added configuration item, after the BIOS program is upgraded and when the number of configuration items is increased, it can be ensured that the current BIOS configuration data in the storage medium is still read effectively.

In the following, the technical solutions of the embodiments of the present invention are described clearly and completely with reference to the accompanying drawings in the embodiments of the present invention. Apparently, the described embodiments are only a part rather than all of the embodiments of the present invention. All other embodiments obtained by persons of ordinary skill in the art based on the embodiments of the present invention without creative efforts shall fall within the protection scope of the present invention.

The method for managing BIOS configuration data of a basic input/output system provided by the present invention is described in the following by using an example where a BIOS program needs to be upgraded to identify new hardware.

In this embodiment, it is assumed that a version of the BIOS program is version 01, and after a BIOS motherboard is started, a CPU executes code segments of the BIOS program that correspond to configuration of device A, device B, and device C in sequence by reading BIOS configuration data in storage areas in a storage medium: configuration item 1, configuration item 2, and configuration item 3, so as to implement basic configuration of device A, device B, and device C. After the BIOS program is upgraded to version 02, different code segments in the BIOS program need to be executed to implement the basic configuration of device A, device B, device C, and device D in sequence. That is to say, after the BIOS program is upgraded from version 01 to version 02, the number of configuration items is increased.

In the prior art, the BIOS configuration data is allocated dynamically, so that the BIOS program and the BIOS configuration data are in one-to-one correspondence. When the BIOS program is upgraded from version 01 to version 02, the number of configuration items is increased, and a previous storage layout of the BIOS configuration data may be destroyed, so that when the BIOS program of version 02 is executed, the BIOS configuration data in the storage medium cannot be read effectively, and execution of different code segments of the BIOS program finally leads to disorder of a configuration function.

In this embodiment, a non-volatile storage medium relatively independent of a storage area of a BIOS program code is divided into multiple storage areas, BIOS configuration data required for executing the BIOS program is stored in corresponding fixed areas in the non-volatile storage medium in sequence according to preset order, and a value of an idle area storing no BIOS configuration data is set to a pre-agreed default value. It should be noted that, after the BIOS program is upgraded so that a configuration item is newly added, when a BIOS program of a new version is executed, original BIOS configuration data and newly added BIOS configuration data needs to be read effectively, so a function of the newly added configuration item needs to use the pre-agreed default value of the idle area as a default value the newly added configuration item, so as to ensure that the BIOS configuration data in the storage medium remains unchanged and can be read effectively after the BIOS program is upgraded.

It can be understood that, when storage of BIOS configuration data is performed, the storage can be performed according to a pre-agreed address, so as to ensure fixed storage of the BIOS configuration data.

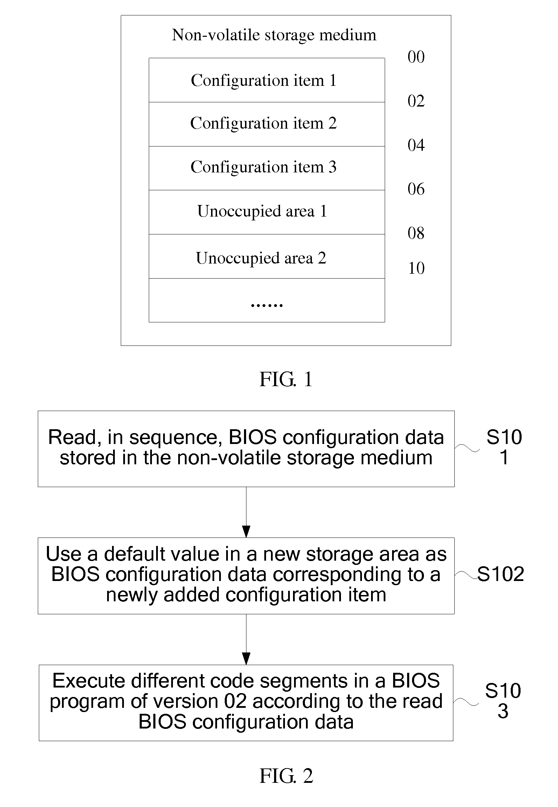

As shown in FIG. 1, in a storage structure of BIOS configuration data corresponding to a BIOS program of version 01, a fixed starting position corresponding to configuration item 1 is 00, a fixed starting position corresponding to configuration item 2 is 02, and a fixed starting position corresponding to configuration item 3 is 04; a pre-agreed default value is stored in an idle storage area. For example, the default value is 0.

After the BIOS program is upgraded from version 01 to version 02 and when the number of configuration items is increased, through the method for managing the BIOS configuration data of the basic input/output system provided by the embodiment of the present invention, the BIOS configuration data currently stored in the non-volatile storage medium can be read effectively. When a BIOS program code of version 02 is read and the BIOS program is executed, as shown in FIG. 2, the method may include:

S101: Read the BIOS configuration data stored in the non-volatile storage medium in sequence.

When the BIOS program is executed, different code segments of the program need to be executed according to the read corresponding BIOS configuration data, thereby finally implementing basic configuration of each basic input/output system. Because a storage area of the BIOS configuration data is relatively independent of a storage area of the BIOS program code, after the BIOS program is upgraded from version 01 to version 02, BIOS configuration data in the storage medium corresponding to version 01 remains unchanged. Therefore, when the BIOS program of version 02 is executed, original stored BIOS configuration data is first read in sequence.

S102: Use a default value in a new storage area as BIOS configuration data corresponding to a newly added configuration item.

After the BIOS program is upgraded from version 01 to version 02, the number of configuration items is increased, so an idle area storing no BIOS configuration data, unoccupied area 1, is used as a storage area of the BIOS configuration data corresponding to the newly added configuration item, so as to ensure that before and after the upgrading, a layout of the original BIOS configuration data in the storage medium remains unchanged, and a fixed storage area is allocated to the newly added configuration item. It can be understood that, a default function configuration value of the newly added configuration item is the same as a default value stored in the unoccupied area 1, so as to implement effective initial configuration of the newly added configuration item.

S103: Execute different code segments in the BIOS program of version 02 according to the read BIOS configuration data.

When the BIOS program of version 02 is executed, according to the read BIOS configuration data in configuration item 1, configuration item 2, configuration item 3, and unoccupied area 1, the different code segments in the BIOS program are executed in sequence, so as to implement basic configuration of device A, device B, device C, and device D.

It can be understood that, the order for executing step S101 and step S102 is not limited to the order described in this embodiment. For example, step S102 may be executed first and then S101 is executed, or step S101 and step S102 are executed simultaneously, which are all reasonable.

In the embodiment of the present invention, the BIOS configuration data is stored in the fixed storage area of the non-volatile storage medium, where the fixed storage area is independent of the storage area of the BIOS program code; when new BIOS configuration data is required for executing the upgraded BIOS program, a value in a new storage area independent of the current BIOS configuration area is used as the new BIOS configuration data. Therefore, in a manner of fixedly storing the BIOS configuration data and allocating a pre-agreed area to a newly added configuration item, after the BIOS program is upgraded and when the number of configuration items is increased, it can be ensured that the current BIOS configuration data is still read effectively.

It should be noted that, in a case that the number of configuration items is decreased after a BIOS program is upgraded, BIOS configuration data in a subtracted configuration item is retained, so as to prevent storage locations of other BIOS configuration data from shifting, and ensure that storage areas of the BIOS configuration data are fixed and unchanged.

In an actual application, BIOS configuration data in a non-volatile storage medium may be invalid for reasons such as virus intrusion, and using the invalid BIOS configuration data to configure the basic input/output system leads to function disorder. In order to ensure that, on the premise that current BIOS configuration data is valid, the current BIOS configuration data can be read effectively when the BIOS program is upgraded and the number of configuration items is increased, another embodiment of the present invention provides a method for managing of BIOS configuration data of a basic input/output system.

In this embodiment, in a storage area of the non-volatile storage medium, not only is BIOS configuration data stored in a fixed location, but also a check value Checksum for identifying whether the current BIOS configuration data is readable is stored. The check value Checksum may be obtained by a CPU combining all bytes of stored BIOS configuration data through a series of arithmetic or logic operations. When normal modification, such as user modification, is performed on the BIOS configuration data in the non-volatile storage medium, the CPU recalculates the check value Checksum and performs updating processing. The CPU fails to sense abnormal modification through a communication interface and cannot recalculate the check value to rewrite the currently stored check value Checksum.

Still it is assumed that the version of the BIOS program is version 01, and after a BIOS motherboard is started, the CPU executes code segments of the BIOS program that correspond to configuration of device A, device B, and device C in sequence by reading the storage areas in the non-volatile storage medium: configuration item 1, configuration item 2, and configuration item 3, so as to implement basic configuration of device A, device B, and device C. After the BIOS program is upgraded to version 02, different code segments in the BIOS program need to be executed to implement basic configuration of device A, device B, device C, and device D in sequence. That is to say, after the BIOS program is upgraded from version 01 to version 02, the number of configuration items is increased.

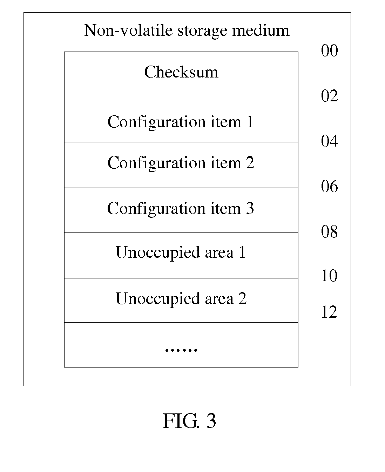

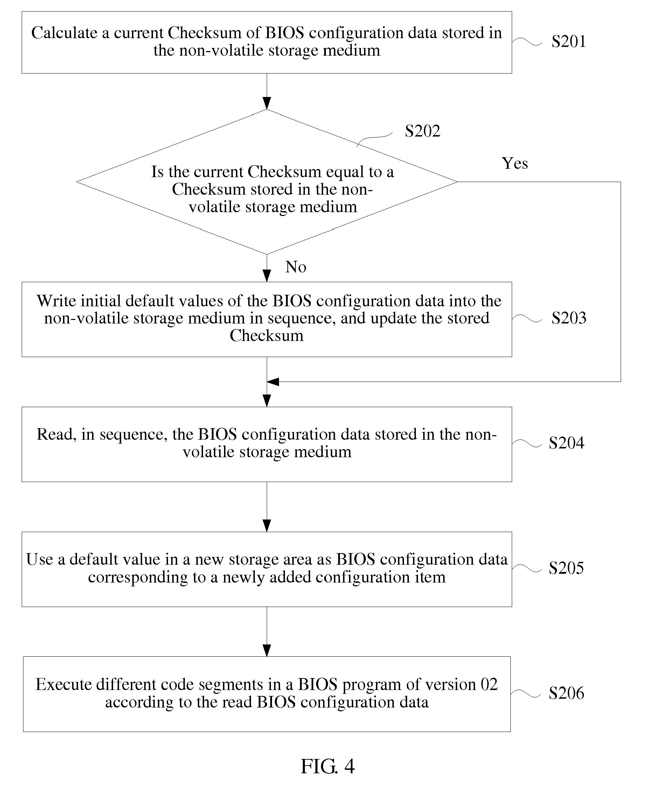

A storage structure of the check value Checksum and the configuration items in the non-volatile storage medium is shown in FIG. 3. As shown in FIG. 4, the method for managing BIOS configuration data of a basic input/output system provided by this embodiment may include:

S201: Calculate a current check value Checksum of BIOS configuration data stored in the non-volatile storage medium.

When the BIOS program of version 02 is executed, a check value Checksum corresponding to current BIOS configuration data is calculated first to perform validity determination of subsequent BIOS configuration data. A calculation method of the check value Checksum may still be that: the CPU combines all the bytes of the stored BIOS configuration data through a series of arithmetic or logic operations.

S202: Determine whether the current check value Checksum is equal to a check value Checksum stored in the non-volatile storage medium; if no, execute step S203; if yes, directly execute step S204.

The calculated current check value Checksum is compared with the check value Checksum stored in the non-volatile storage medium, if equal, it is indicated that the BIOS configuration data in the storage medium is not abnormally modified and is in a valid state; and if not equal, it is indicated that the BIOS configuration data in the storage medium is abnormally modified so that the BIOS configuration data in the storage medium is in an invalid state.

S203: Write initial default values of the BIOS configuration data into the non-volatile storage medium in sequence, and update the stored check value Checksum.

When it is determined that the BIOS configuration data in the storage medium is in the invalid state, configuration items in the storage medium need to be initialized, so that the BIOS configuration data is the initial default values. In addition, a check value Checksum of the initialized BIOS configuration data needs to be calculated, so as to update data in a check value area in the storage medium.

S204: Read, in sequence, the BIOS configuration data stored in the non-volatile storage medium.

S205: Use a default value in a new storage area as BIOS configuration data corresponding to a newly added configuration item.

S206: Execute different code segments in the BIOS program of version 02 according to the read BIOS configuration data.

Step S204 to step S206 are similar to step S101 to step S103 of the foregoing embodiment, which are not repeated here.

In this embodiment, in the storage area of the non-volatile storage medium, not only is the BIOS configuration data stored in a fixed location, but also a check value Checksum for identifying whether the current BIOS configuration data is readable is stored. In a manner of adding the check value in the storage medium, before the configuration data is read, the validity of the current BIOS configuration data is determined and analyzed. In this way, on the premise that the current BIOS configuration data is valid, it is ensured that the current BIOS configuration data can be read effectively in the case that the number of configuration items is increased after the BIOS program is upgraded.

It should be noted that, the non-volatile storage medium may be a CMOS memory. The CMOS requires a specific power supply battery and the power supply battery is affected by factors such as temperature, life, and bad contact. Therefore, preferably, the non-volatile storage medium may be an EEPROM (Electrically Erasable Programmable Read-Only Memory, electrically erasable programmable read-only memory) mounted to a SMBUS (System Management Bus, system management bus) controller of a south bridge of the system, or a specific configuration area is marked off on a storage medium where the BIOS program is located, to store the BIOS configuration data. It can be understood that, the storage medium where the BIOS configuration data is located is relatively independent of a storage area where the BIOS program is located, so as to ensure that the BIOS configuration data does not change along with the upgrading of the BIOS program.

The Embodiments in the present specification are described in a progressive manner. Each embodiment focuses on its difference from other embodiments, and for the same or similar parts of the embodiments, reference may be made to each other. The apparatus disclosed in the embodiments corresponds to the method disclosed in the embodiments, so description of the apparatus is relatively simple. For a related part, reference may be made to description of the method part.

Professional persons may further realize that, the units and the steps of algorithms of each example described in combination with the embodiments disclosed in this document may be implemented by electronic hardware, computer software, or a combination of the two. In order to illustrate interchangeability of the hardware and the software, the compositions and steps of the examples are generally described according to functions in the foregoing description. Whether these functions are executed in a manner of hardware or software depends upon a particular application and design constraint conditions of the technical solution. Professional technicians can use different methods to implement the described functions for each particular application, but it should not be deemed that such implementation goes beyond the scope of the present invention.

Accordingly, an embodiment of the present invention further provides a system for managing BIOS configuration data of a basic input/output system, which may include:
a central processing unit, configured to read a BIOS program code and execute a BIOS program,
when executing the BIOS program, execute different code segments in the BIOS program according to read BIOS configuration data, where the BIOS configuration data is stored in a fixed area of a non-volatile storage medium and the fixed area is independent of a storage area of the BIOS program code, and
when new BIOS configuration data is required for executing the BIOS program, use a value in a new storage area as the new BIOS configuration data, where the new storage area is an area independent of the storage area of the current BIOS configuration data and the storage area of the BIOS program code, and the value in the new storage area is a pre-agreed default configuration value;
the non-volatile storage medium, configured to store, in the fixed area, the BIOS configuration data which is required for executing the different code segments in the BIOS program; and
a BIOS program storage medium, configured to store the BIOS program code.

Compared with the existing manner of dynamically storing BIOS configuration data, in the present invention, BIOS configuration data is stored in a fixed storage area of a non-volatile storage medium, where the fixed storage area is independent of a storage area of a BIOS program code; when new BIOS configuration data is required for executing an upgraded BIOS program, a value in a new storage area independent of a current BIOS configuration area is used as the new BIOS configuration data. Therefore, in a manner of fixedly storing the BIOS configuration data and allocating a pre-agreed area to a newly added configuration item, after the BIOS program is upgraded and when the number of configuration items is increased, it can be ensured that the current BIOS configuration data is still read effectively.

The non-volatile storage medium is specifically configured to:
Store the BIOS configuration data, which is required for executing the different code segments in the BIOS program, in multiple fixed areas in the non-volatile storage medium in sequence according to preset order; and
set a value of an area storing no BIOS configuration data to a pre-agreed default value.

Further, in order to ensure that, on the premise that the current BIOS configuration data is valid, the current BIOS configuration data can be read effectively when the BIOS program is upgraded and the number of configuration items is increased, the non-volatile storage medium is specifically configured to:
store, in the fixed area, the BIOS configuration data which is required for executing the different code segments in the BIOS program, and store a check value Checksum corresponding to the BIOS configuration data.

Accordingly, the central processing unit is specifically configured to:
calculate a current check value Checksum of the BIOS configuration data stored in the non-volatile storage medium;
determine whether the current check value Checksum is equal to a check value Checksum stored in the non-volatile storage medium;
if no, write default values of the BIOS configuration data into corresponding fixed areas in the non-volatile storage medium in sequence, and after updating the stored check value Checksum, read the BIOS program code and execute the BIOS program; and
if yes, read the BIOS program code and execute the BIOS program.

In this embodiment, in the storage area of the non-volatile storage medium, not only is the BIOS configuration data stored in a fixed location, but also a check value Checksum for identifying whether the current BIOS configuration data is readable is stored. In a manner of adding the check value in the storage medium, before the configuration data is read, the validity of the current BIOS configuration data is determined and analyzed. In this way, on the premise that the current BIOS configuration data is valid, it is ensured that the current BIOS configuration data can be read effectively in the case that the number of configuration items is increased after the BIOS program is upgraded.

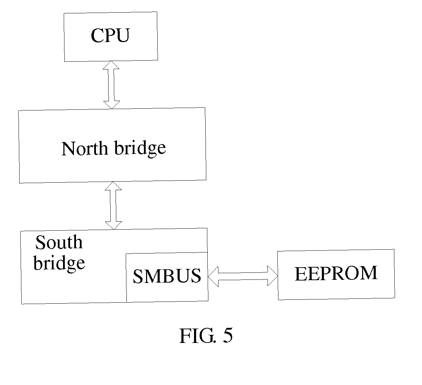

In an actual application, the non-volatile storage medium is a CMOS memory. In order to prevent the non-volatile storage medium from being affected by factors such as temperature, bad contact of a power supply battery, and life, as shown in FIG. 5, the non-volatile storage medium may be an EEPROM (Electrically Erasable Programmable Read-Only Memory, electrically erasable programmable read-only memory) mounted to a system management bus SMBUS controller of a south bridge opposite a north bridge. When executing the BIOS program, the CPU may access the EEPROM through the SMBUS.

It can be understood that, in a case that it is ensured that the BIOS program code and the BIOS configuration data are completely separated from each other, the non-volatile storage medium may also be a dedicated area for the BIOS configuration data in a storage medium where the BIOS program is located.

Steps of the method or algorithm described in combination with the embodiments disclosed in this document may be directly implemented by using hardware, a software module executed by a processor, or a combination of the two. The software module may be placed in a random access memory (RAM), a memory, a read-only memory (ROM), an electrically programmable ROM, an electrically erasable programmable ROM, a register, a hard disk, a removable magnetic disk, a CD-ROM, or any storage medium of another form well-known in the technical field.

The foregoing descriptions of the disclosed embodiments enable persons skilled in the art implement or use the present invention. Various modifications of the embodiments are apparent to persons skilled in the art, and the general principle defined in this document can be implemented in other embodiments without departing from the spirit or scope of the present invention. Therefore, the present invention is not limited to these embodiments described herein, but should conform to the widest scope consistent with the principle and novel features disclosed in this document.

## Claims

1. A method for managing BIOS configuration data of a basic input/output system, comprising:
reading a BIOS program code and executing a BIOS program;
when executing the BIOS program, executing different code segments in the BIOS program according to read BIOS configuration data, wherein the BIOS configuration data is stored in a fixed storage area of a non-volatile storage medium and the fixed storage area is independent of a storage area of the BIOS program code; and
when new BIOS configuration data is required for executing the BIOS program, using a value in a new storage area as the new BIOS configuration data, wherein the new storage area is an area independent of the storage area of the current BIOS configuration data and the storage area of the BIOS program code, and the value in the new storage area is a pre-agreed default configuration value.

2. The method according to claim 1, wherein the storing the BIOS configuration data in the fixed storage area of the non-volatile storage medium is specifically:
storing the BIOS configuration data, which is required for executing the different code segments in the BIOS program, in multiple fixed areas in the non-volatile storage medium in sequence according to preset order; and
setting a value of an area storing no BIOS configuration data to the pre-agreed default value.

3. The method according to claim 1, wherein before the reading the BIOS program code and executing the BIOS program, the method further comprises:
calculating a current check value Checksum of the BIOS configuration data stored in the non-volatile storage medium;
determining whether the current check value Checksum is equal to a check value Checksum stored in the non-volatile storage medium; and
if no, writing default values of the BIOS configuration data into corresponding fixed areas in the non-volatile storage medium in sequence, and updating the stored check value Checksum.

4. The method according to claim 1, wherein BIOS configuration data that is not read when the BIOS program is executed is retained.

5. A system for managing BIOS configuration data of a basic input/output system, comprising:
a central processing unit, configured to read a BIOS program code and execute a BIOS program,
when executing the BIOS program, execute different code segments in the BIOS program according to read BIOS configuration data, wherein the BIOS configuration data is stored in a fixed area of a non-volatile storage medium and the fixed area is independent of a storage area of the BIOS program code, and
when new BIOS configuration data is required for executing the BIOS program, use a value in a new storage area as the new BIOS configuration data, wherein the new storage area is an area independent of the storage area of the current BIOS configuration data and the storage area of the BIOS program code, and the value in the new storage area is a pre-agreed default configuration value;
the non-volatile storage medium, configured to store, in the fixed area, the BIOS configuration data which is required for executing the different code segments in the BIOS program; and
a BIOS program storage medium, configured to store the BIOS program code.

6. The system according to claim 5, wherein the non-volatile storage medium is specifically configured to:
store the BIOS configuration data, which is required for executing the different code segments in the BIOS program, in multiple fixed areas in the non-volatile storage medium in sequence according to preset order; and
set a value of an area storing no BIOS configuration data to the pre-agreed default value.

7. The system according to claim 5, wherein
the non-volatile storage medium is specifically configured to:
store, in the fixed area, the BIOS configuration data which is required for executing the different code segments in the BIOS program, and store a check value Checksum corresponding to the BIOS configuration data; and
accordingly, the central processing unit is specifically configured to:
calculate a current check value Checksum of the BIOS configuration data stored in the non-volatile storage medium;
determine whether the current check value Checksum is equal to the check value Checksum stored in the non-volatile storage medium;
if no, write default values of the BIOS configuration data into corresponding fixed areas in the non-volatile storage medium in sequence, and after updating the stored check value Checksum, read the BIOS program code and execute the BIOS program; and
if yes, read the BIOS program code and execute the BIOS program.

8. The system according to claim 5, wherein the non-volatile storage medium is a CMOS memory, an electrically erasable programmable read-only memory EEPROM mounted to a system management bus SMBUS controller of a south bridge, or a dedicated area for the BIOS configuration data in the BIOS program storage medium.
